# EUROPEAN PATENT SPECIFICATION

(11) **EP 3 187 441 B1**
(45) Date of publication and mention of the grant of the patent: **20.04.2022**
(21) Application number: 15382673.0
(22) Date of filing: 29.12.2015
(51) Int. Cl.: B65G 59/04, B65G 59/10

(54) **METHOD FOR DESTACKING TRAYS**
VERFAHREN ZUM ENTSTAPELN VON SCHALEN
PROCÉDÉ PERMETTANT DE DÉSEMPILER DES PLATEAUX

(43) Date of publication of application: 05.07.2017
(73) Proprietor: Grupo Celulosas Moldeadas, S.L., 48291 Atxondo, Bizkaia (ES)
(72) Inventor: RUIZ REDONDO, Aritz, 48291 ATXONDO (Vizcaya) (ES)
(74) Representative: Carpintero Lopez, Francisco

(56) References cited:
- WO-A1-2009/112050
- WO-A1-2015/145994
- JP-A- H0 885 511
- JP-A- H0 891 575
- JP-A- S5 793 840
- JP-A- H02 155 300
- JP-A- 2000 015 368
- JP-A- 2001 048 350
- JP-A- 2001 162 621
- JP-A- 2001 233 479
- JP-A- 2004 018 223
- US-A- 3 718 217

## Description

### Object of the invention

The present invention relates to the field of transport and handling of products, and more particularly to a method for automated separation of stacked trays.

### Background of the invention

Many products are usually transported in trays with multiple concave individual receptacles. This is the case, for example, of cellulose trays used for transporting fruit and other fresh food. It is therefore of crucial importance to automate and optimise the process of handling and loading of such trays. For example, US 2013/0075230 A1 presents a tray loading mechanism based on multiple conveyor belts with varying heights and slotted trays specially adapted for this purpose. In a second example, EP 0670276 B1 presents a computer to manipulate and sort fruit by a plurality of concave hands designed to accommodate, transport and tilt a single piece in order to deposit it.

However, before the fresh products are deposited, the trays are typically stacked in blocks for easy transport and storage. To simplify the task of individually separating each tray for later use, various machines for destacking and handling trays have been developed in the prior art. For example, FR 2983458 A1 presents a system with conveyor belts for handling and loading trays, which includes destacking means.

In particular, tray destacker systems based on suction cups are known in the state of the art. Such systems position the suction cups inside the concave receptacles of the trays and adhere thereto by suction. Once the suction cups have been fixed, the separation of the tray is carried out by a travelling movement of the tray and/or the remaining stack. Finally, the unstacked trays are deposited individually onto a conveyor belt to be filled.

One limitation of these systems is that the side of the tray on which the suction cups rest is the same as that on which the content is deposited. To avoid damaging or leaving marks on the transported product, this side is typically smooth. The lack of roughness makes it difficult to fix the suction cup and also limits the forces and stresses that may be induced on the tray, which may therefore remain stacked. This is not only detrimental to the transport of the trays, but it may also prevent separation of two trays, which remain attached. Additionally, the system described has limitations when it comes to adapting to different tray morphologies and sizes.

Japan patent application JP2001233479A describes a laminated sheet member take-out device for securely separating uppermost sheet members one by one from laminated sheet members.

JP 2001 233479 A discloses in particular a method for destacking trays, wherein the trays comprise a first side with mostly concave receptacles and a second side with mostly convex protuberances comprising the following steps:
- Loading, in receiving means, a plurality of stacked trays, such that said trays are mostly in a horizontal position;
- Positioning the one or more suction cups on one side of the upper tray of the stack;
- Sucking to fix the suction cups to the tray;
- Separating the upper tray from the stack;
- Moving the separated tray up to a specified delivery place.

There is therefore the need in the prior art for a system and automated method for destacking trays, which allows for firmly fixing said trays during their separation and handling and also their adaptation to different tray designs and sizes.

### Description of the invention

The present invention solves the above problems by means of a destacking method according to claim 1, wherein the stacked trays are placed in inverted position, allowing one or more suction cups to adhere to one or more zones situated on the back side of said trays. By improving the adhesion and mobility of the suction cups, the tray handling is facilitated, stronger forces can be exerted on them, and the inclusion of separate additional elements, such as brushes and blowers, is possible.

A system for destacking trays is presented. Each of said trays, typically made of cellulose or materials of similar properties, comprises a first side (front side) adapted for depositing fruit or other objects. Said front side comprises a plurality of receptacles or mostly concave indentations, whose arrangement, size and morphology may vary in any particular embodiment. The trays also comprise a second side (back side) with consequently mostly convex protuberances generated by the receptacles described. The suction cups can adhere to said convex protuberances or optionally adhere to one or more of the mostly flat regions which are not occupied by the projections resulting from the receptacles. The back side is typically rougher than the front side, thus promoting a better adhesion of the suction cups, although the system can apply equally to trays in which the surface of the front side and back side does not present this difference in roughness.

The stacked rays are inserted into receiving means arranged in the system manually or through automatic feeder means, such as a conveyor belt. Space constraints influence the use of one embodiment or another, such that the present invention can adapt to very small rooms. Tray stacks are inserted so that the front side, typically smooth and with concave protuberances, is facing down, while the back side, typically rough and with convex protuberances, is facing upwards. The system comprises, at least, one lifting platform, which comprises receiving means arranged in the invention to receive the stack of trays, which is lifted to separating means based on suction cups. The system can comprise one or multiple loading belts, which carry the trays up to the receiving means, also managed by separating means, said separating means being able to be dynamically reconfigured to adapt to the characteristics of the trays on each loading belt.

The separating means comprise one or more suction cups, each controlled by a positioning mechanism that allows for the placement of each suction cup on a region of the back side of the tray. Preferably, the separating means comprise independent positioning and/or suction control mechanisms for each of the involved suction cups. Also preferably, the separating means comprise four suction cups, each adapted to be placed on a region of a quadrant of the tray.

Once the suction cups are fixed, the separating means comprise a mechanism of horizontal movement that transports such separating means (and therefore also the tray attached to them) to a specified delivery place. An unloading belt can be included in said delivery place. Said unloading belt therefore acts as an exit from the system, where the trays are provided individually separated. The system preferably comprises a flipping mechanism in the specified delivery place, which turn the trays so that the front side is facing up.

The separating means are, therefore, on a horizontal plane higher than the receiving means, the lifting platform and, if present, the loading and unloading belts, wherein said belts can be at the same height or at different heights. The lifting platform is responsible for transporting trays stacked from the receiving means up to the suction cups of the separating means, and can preferably comprise a sensor that detects the presence and absence of trays on said platform. This sensor allows to lift the platform when a new stack is received and to return said platform to its starting position once the separation of the trays from the stack has been completed.

Preferably, the separating means also comprise auxiliary elements, such as blowers or brushes. Said auxiliary elements are located between at least one suction cup and the horizontal lifting platform, on an axis perpendicular to said platform, in order to facilitate the separation of the trays. In particular, the blowers are set to introduce air between two adjacent trays to promote their separation should they be stuck together or if a vacuum has formed between them. On the other hand, brushes are configured to pre-separate the trays by friction during the lifting movement performed by the platform. These auxiliary elements can be incorporated without the risk of releasing the suction cups, thanks to the improvement in the fixation provided by the system.

Also preferably, the system comprises a user interface through which the position of the regions on which each suction cup is to be attached to the tray is selected. More preferably, this interface comprises a touch screen to facilitate this selection. Each position can be selected directly, or the interface can provide a tray index with pre-recorded positions assigned to each type of tray. Also preferably, the lifting platform comprises one or more references that determine the position of the trays on said platform, and that therefore allow the positioning means to correctly position the suction cups.

A method for destacking trays is presented. Said trays comprise a first side with mostly concave receptacles, and a second side with mostly convex protuberances, and may also comprise one or more mostly flat regions. The second side is typically rougher than the first side, although the method can be applied to trays with a similar surface on both sides. The method comprises the following steps:
i. Loading, in receiving means, a plurality of stacked trays, such that said trays are mostly in a horizontal position and with the rough side facing up.
ii. Lifting the stacked trays with a lifting platform up to separating means having one or more suction cups. Preferably, the separating means comprise four suction cups adapted to be placed on the four quadrants of the tray.
iii. Positioning the suction cups on the second side with convex protuberances of the upper tray of the stack. Preferably, the positioning mechanism of each suction cup is independent from the others and is controlled automatically by entering the desired position through a user interface.
iv. Sucking to fix the suction cups to the tray. Preferably, the sucking mechanism of each suction cup is controlled independently.
v. Separating the upper tray from the stack. Preferably, the method can comprise applying auxiliary elements to facilitate said separation, such as, for example, one or more blowers and one or more brushes.
vi. Moving the separated tray up to a specified delivery place.
vii. Preferably, the method comprises flipping over the trays before leaving, so that the first side with concave receptacles is facing upwards and therefore makes it possible to directly deposit the objects to be carried on it.
viii. Also preferably, the method comprises loading stacked trays from one or more loading belts by dynamically reconfiguring the positioning mechanisms therebetween.

Note that any preferred option and any characteristic of the particular embodiments described for the system are applicable to the method of the invention and vice versa. Therefore, the system and method described provide a robust and efficient destacking system enabling to fix, with stronger force, the suction cups to the tray, thus facilitating handling thereof and allowing for separation thereof even when it adheres to other adjacent trays. The invention also makes possible the adaptation to different sizes and morphologies of trays, as well as to configurations with multiple loading belts. These and other advantages of the invention will become apparent in the light of its detailed description.

### Description of the drawings

In order to assist in a better understanding of the characteristics of the invention according to a preferred exemplary embodiment thereof and to complement this description, the following figures, of illustrative and non-limiting nature, are attached:
Figure 1 shows the schematic drawing of a tray exemplifying the scope of application of a particular embodiment of the method of the invention.
Figure 2 shows a 3-dimensional view of one of the embodiments of the invention, wherein the front part is detailed.
Figure 3 shows a simplified schematic drawing of the tray loading and destacking process according to a particular embodiment of the method of the invention.
Figure 4 is a perspective view of a particular embodiment of the system with two loading belts operated by the same separating means.
Figure 5 is a simplified schematic drawing of the separating means according to a particular embodiment of the invention.
Figure 6 shows a three-dimensional view of one of the embodiments of the invention, wherein the back part is detailed and the flipping means can be seen.
Figure 7 shows the effect of the suction cups according to one of the embodiments of the invention.

### Preferred embodiment of the invention

In this text the word "comprises" and its derivations (such as "comprising", etc.) should not be understood in an excluding sense, that is, these terms should not be interpreted as excluding the possibility that what is described and defined may not also include further elements, steps, etc.

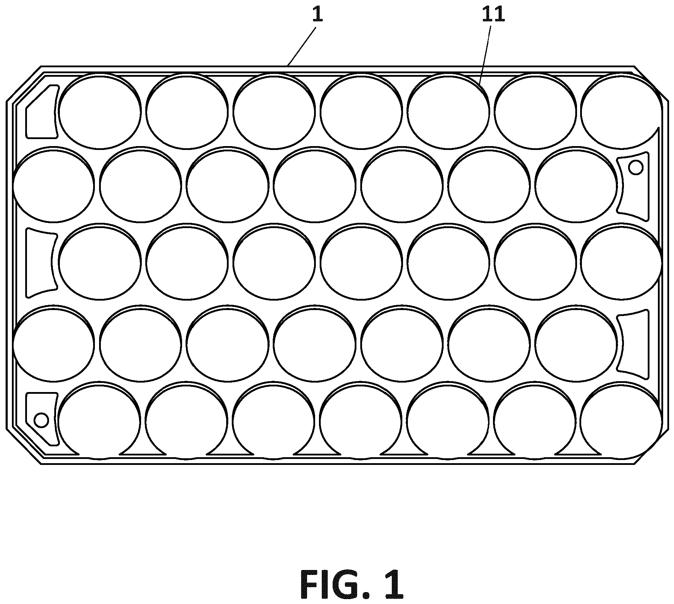

Figure 1 shows a schematic drawing of an example of a tray (1) on which preferred embodiments of the method of the invention are applied. In particular, the tray (1) comprises a first smooth side (front side) and a second rougher side (back side). The back side, shown in said figure, comprises a plurality of convex protuberances (11) corresponding to a plurality of receptacles of the front side. The trays (1) are typically made of cellulose, although the system is applicable to trays (1) of equivalent morphology made of any other material. During their storage and introduction in the system of the invention, the trays (1) are stacked one above the other, so that, typically, the protuberances (11) of one tray (1) are wholly or partly introduced in the receptacles of the next tray (1).

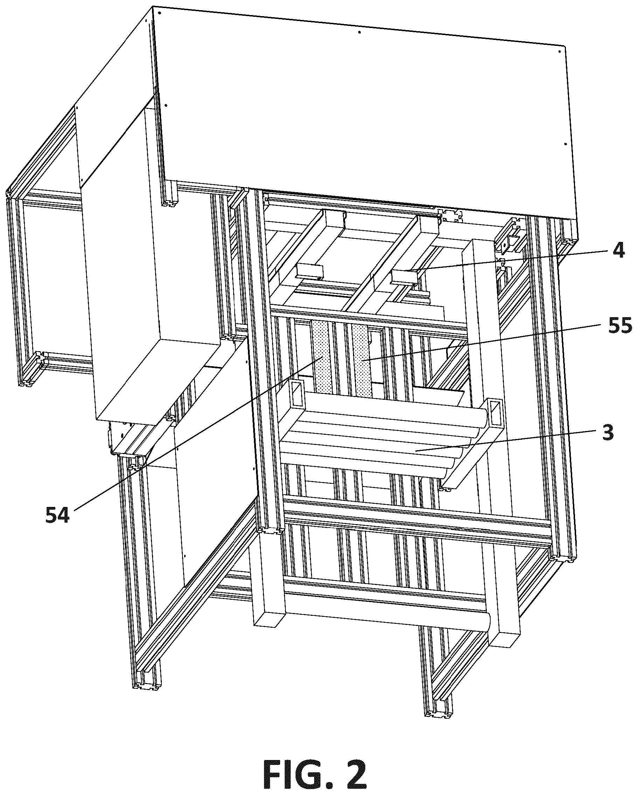

Figure 2 shows a three-dimensional view of one embodiment of the invention, wherein the front side is detailed and the receiving means for the trays (1) and the rail system guiding the lifting platform (3) to a position accessible to the separating means (4) can be seen. A brush mechanism (54) to separate the trays (1) and which will be explained in detail below is also seen.

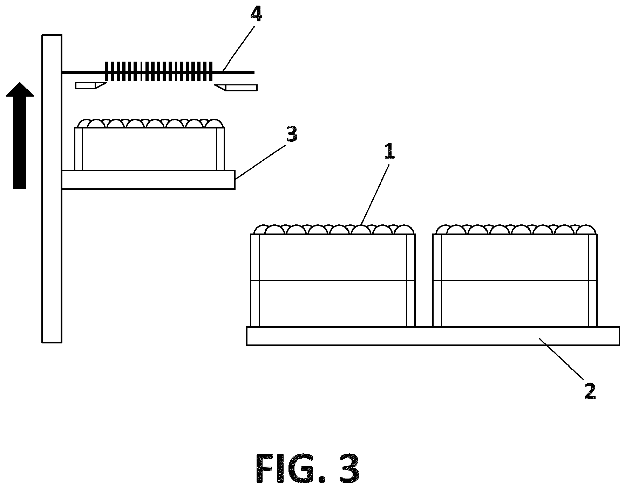

Figure 3 shows a schematic view of the process of separation of said stacked trays (1), and the elements involved in said process, according to one embodiment of the invention. The stacked trays (1) are introduced into the receiving means of the invention, either manually or by adding loading means, such as the loading belt (2) depicted in Figure 3. The trays (1) of said stacks are introduced in horizontal position and with the back side up. In the case of using a loading belt (2), it can be manual or automatic and comprise, for example, a plurality of rotating rollers or an automated conveyor belt. At the end of the loading belt (2) a mostly horizontal lifting platform (3) is located, with a size adapted to receive a stack of trays (1). The movement of the loading belt (2) ensures the stack of trays (1) is inserted all the way to the back of the lifting platform (3).

When the lifting platform (3) receives a stack of trays (1), it moves vertically until the upper end of the stack is in a position accessible to separating means (4) located on said lifting platform (3). The lifting platform (3) comprises a number of references and/or stops, which may be fixed or mobile when operating with different sizes of tray (1), and which set and define the position of the trays (1) relative to the lifting platform (3) to allow alignment of the separating means (4). Also alternatively or additionally, the lifting platform (3) may comprise positioners for moving the trays (1) to a predetermined position, for example to a corner of the lifting platform (3). It is envisaged that at least one lifting platform (3) may comprise positioning references for a positioning mechanism (42). The system is provided with a linear drive actuator to generate the movement of the lifting platform (3).

Once the stack of trays (1) is raised to its upper position, the separating means (4) apply one or more suction cups (41) on one or more regions, firmly fixing the tray (1). At the top of the separating means (4), a sensor that detects the upper tray (1) from the stack is located, so that the lifting platform (3) knows how far it has to go up. When, instead of the convex protuberances (11), a flat area (which is at a lower level) is sucked, an offset is entered into the control to modify said stop point of the lifting platform (3).

Next, the separating means (4) separate the fixed tray (1) from the rest of the stack, and move it horizontally up to an unloading belt (5). To separate the tray (1) from the rest of the stack, the lifting platform (3) is moved down slightly. Alternatively, the separating means (4) can make the opposite movement, that is, raising the tray (1) fixed by the suction cups (41) prior to its movement on the horizontal plane. Once the tray (1) is separated and transferred to the unloading belt (5), the lifting platform (3) sets its vertical position to allow the separation means (4) to access the next tray (1) from the stack. This process is repeated until the lifting platform (3) is emptied, at which moment it returns to its starting position together with the loading belt (2). In order to determine when the lifting platform (3) is loaded and when a stack of trays (1) has been completely separated, there are one or more integrated sensors configured to detect the presence of trays (1).

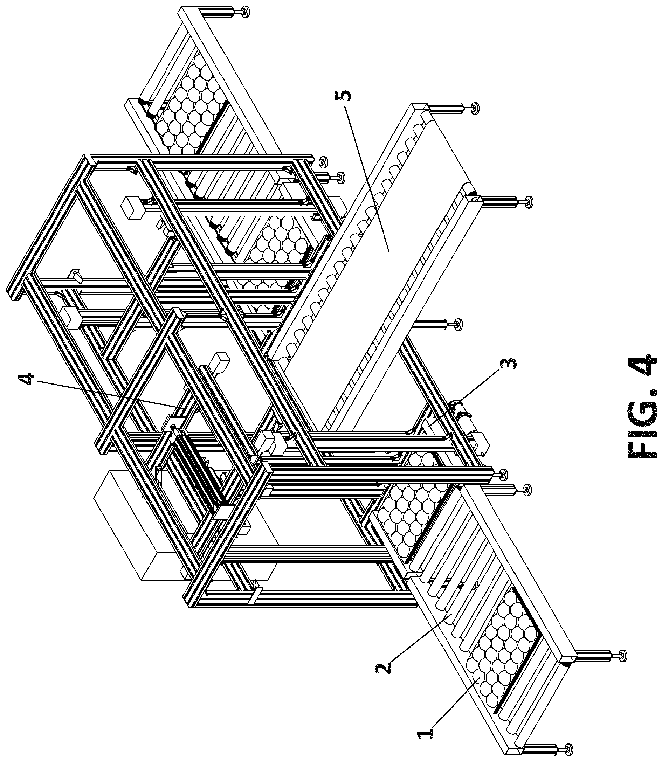

Figure 4 shows a particular embodiment of the system, wherein the same separation means (4) are configured to destack trays (1) fed from two loading belts (2). Each loading belt (2) has its own lifting platform (3). Furthermore, the two loading belts (2) are aligned and located at the same height to facilitate the movements of the separating means (4) therebetween. Note, however, that other types, variations in number, and positions of the loading belts (2) can be implemented within the scope of the invention by simply modifying the travel mechanisms of the separating means (4). By allowing the separating means (4) to operate on one of the lifting platforms (3) while the other lifting platform (3) is loading a new stack of trays (1) the efficiency of the system is improved. Note also that the separating means (4) can be reconfigured as they move between two lifting platforms (3), thus enabling them to operate with different types of trays (1) at the same time.

According to another particular embodiment of the invention, the system includes a dual configuration where two separators are arranged in parallel. Thus, the system is synchronised to work simultaneously with two different trays (1) which, although equal in size, their receptacles and corresponding convex protuberances (11) are arranged in an asymmetrical way or at least occupy different areas in the trays (1) so that they can be stacked without crushing the content deposited in the receptacles.

Additionally, the system, with two separators working in parallel and configured to alternate the delivery of trays (1), is equipped, in one of the embodiments of the invention, with control means, so that the delivery of trays (1) is effectively alternating, and in the case of detecting the lack of a tray (1) in one of the exits, to stop the separator of the other exit until receiving a tray (1) of the expected type.

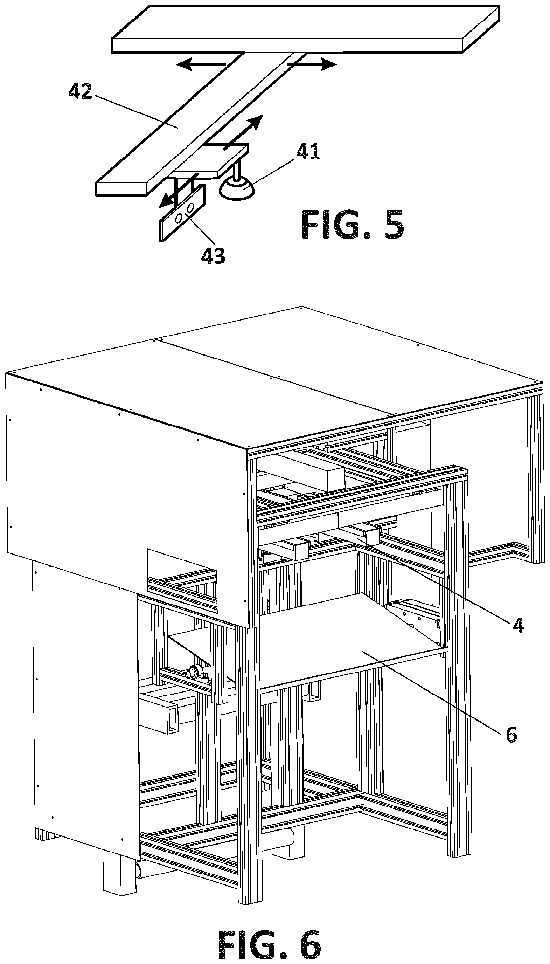

Figure 5 presents a particular embodiment of the separating means (4) in greater detail. The separating means (4) comprise a plurality of suction cups (41), whose position can be modified through positioning mechanisms (42). Preferably, the positioning mechanism (42) for each suction cup (41) freely controls its position on the two axes of the horizontal plane, the movement of each suction cup (41) being independent from the rest. In addition, and depending on the particular embodiment, the positioning mechanism (42) can also provide the suction cup (41) with movement on the vertical axis. In this case, the separating means (4) can remove the tray (1) from the stack without the need for the lowering of the lifting platform (3) to occur. In a particular embodiment, the separating means (4) comprise four suction cups (41), distributed such that each one is fixed on a quadrant of the tray (1). The suction mechanism of each suction cup (41) can be controlled independently, allowing it to adapt to different tray (1) materials and morphologies.

An alternative that is provided for in the present invention when using the four-suction-cup (41) configuration is the use of only two of them (those on any diagonal) to perform the separation. The effect produced by using only one suction cup (41) on each side is to enhance the bow of the tray (1), which improves the introduction of air from the blowers (43) and, therefore, the separation in complex trays (1). When choosing the use of only two suction cups (41) for suction, the other two suction cups (41) may be arranged so as to serve as a "stop" so that the tray (1) is not too bowed at the time of moving it to the exit area, and its bottom does not impact against the separator wall.

Additionally, another alternative is contemplated, which consists of using only two suction cups (41) to separate and, once the tray (1) is separated, to hold it with the four suction cups (41).

The suction cups (41) have preferably a certain spring effect so as to perfectly contact on all their perimeter and not to lose the vacuum effect, regardless of whether they are contacting a flat side or a "ball".

The separating means (4) further comprise auxiliary elements to promote the separation of trays (1). In particular, these separating means (4) comprise blowers (43) and brushes (54). The blowers (43) introduce air between the tray (1) on which the suction cups (41) are applied and the tray (1) immediately below. The blowers (43) are movable about a shaft, so that they can approach each other and are able to turn. Said blowers (43) are preferably located on the shorter sides of the tray (1). Optionally, one or more blowers (43) can be overridden if not needed, without affecting the flow of air from the other blowers (43) or air knives. One of the particular embodiments of the invention comprises four blowers(43), which can be programmed individually for blowing, or not depending on the type and model of tray (1) inserted.

The brush mechanism (54), as can be seen in Figure 2, is equipped with a plurality of brushes, roughness, or rough surface arranged along a vertical axis (55) between the two rear pillars of the lifting platform (3), such that the brushes act on the stack of trays (1) present on the lifting platform (3) with the raising/lowering movement performed by the lifting platform itself (3). In this way, the brush mechanism (54) takes advantage of this raising/lowering movement to pre-separate the trays (1) through the friction of the profile of the trays (1) with the brush mechanism (54), which facilitates the subsequent separation through suction cups (41).

The positioning mechanism (42) of each suction cup (41) is preferably implemented by two perpendicular rails. The first rail enables a mobile arm to travel along a first axis of the horizontal plane. The second rail is located on the mobile arm and allows the suction cup (41) to travel on the second axis of the horizontal plane. In the event that the particular embodiment of the system requires the suction cups (41) to travel vertically, each positioning mechanism (42) can comprise a third rail perpendicular to the two aforementioned rails. Note that any other mechanical technique known in the prior art to provide mobility to the suction cups (41) on the horizontal plane can be alternatively implemented within the scope of the invention. Also, the auxiliary elements of separation, such as the blowers (43) and brushes, may either have a fixed position to the suction cups (41), by moving in an interdependent way; or have a fixed position on the system; or be equipped with positioning mechanisms (42) independently from said suction cups (41).

The position of the suction cups (41) is controlled from a user interface connected to the positioning mechanism (42). The user interface preferably comprises a touch screen to facilitate the work of the operator, although it can comprise any other means of communication with the user known in the prior art, as for example keyboards, switches, screens, speakers, etc. All communications between elements of the system can be done both in a wired or wireless way, depending on the particular embodiment thereof. In order to facilitate the selection of the positions of the suction cups (41), the system preferably comprises a database with the different types of existing trays (1), and fixing positions associated with each of these types. Thus, the operator does not need to manually enter the corresponding coordinates, but it suffices to select, in the database, the tray (1) that is being introduced at any time.

Figure 6 shows a three-dimensional view of one of the embodiments of the invention where the flipping means (6), which turn the trays (1) transported by the separating means (4), can be seen. The trays (1) are deposited upside down on the flipping means (6), which in this case comprise a shelf attached to a rotary axle placed transversely to the direction of travel of the separating means (4), so that the shelf performs rotary movements jointly with said axis at 180° intervals, thus flipping over the trays (1) placed in inverted position and providing the trays (1) at the exit ready to fill the receptacles.

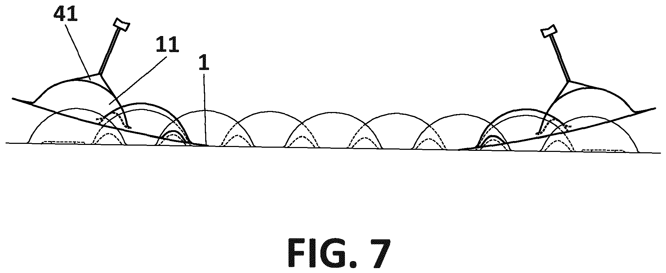

Figure 7 shows the effect of the suction cups (41) according to one of the embodiments of the invention, wherein when making contact on the convex protuberances (11) of the second side of one of the trays (1), the suction effect of the suction cups (41) itself makes it possible to separate that tray (1) by its the ends. The tray (1) can thus bow slightly, which helps in the separation between trays (1) and avoids a possible vacuum effect between them.

In view of this description and Figures, the person skilled in the art will understand that the invention has been described according to preferred embodiments thereof.

## Claims

1. Method for destacking trays (1), wherein the trays (1) comprise a first side with mostly concave receptacles, and a second side with mostly convex protuberances (11), the method comprising the following steps:
- Loading, in receiving means, a plurality of stacked trays (1), such that said trays (1) are mostly in a horizontal position;
- Lifting the stacked trays (1) with a lifting platform (3) up to separating means (4) having one or more suction cups (41), said lifting platform (3) comprising the receiving means arranged to receive the stack of trays (1);
- Positioning the one or more suction cups (41) on the second side with convex protuberances (11) of the upper tray (1) of the stack;
- Sucking to fix the suction cups (41) to the tray (1);
- Separating the upper tray (1) from the stack;
- Moving the separated tray (1) up to a specified delivery place; and
- Flipping over the trays (1) before leaving, so that the first side with concave receptacles is facing upwards and therefore makes it possible to directly deposit the objects to be carried on it.

2. Method according to claim 1 **characterised in that** it comprises loading the plurality of trays (1) in the receiving means through a loading belt (2) and/or moving the separated trays (1) to an unloading belt (5) at the specified delivery place.

3. Method according to any of claims 1 to 2 **characterised in that** it further comprises detecting the presence of trays (1) on the lifting platform (3) by means of a sensor, and returning the lifting platform (3) to its position when the sensor detects that there are no trays (1) to be destacked on the lifting platform (3).

4. Method according to any of claims 1 to 3 **characterised in that** it comprises alternatively destacking trays (1) from two loading belts (2) and two lifting platforms (3) located on opposite sides of a single unloading belt (5).

5. Method according to claim 1, **characterised in that** the step of loading the trays (1), the second side of the tray (1) is rougher than the first side, such that the rough side is facing up.

6. Method according to claim 1, **characterised in that** the step of separating the trays (1) is made by four suction cups (41) adapted to be placed on the four quadrants of the tray (1).

7. Method according to claim 1, **characterised in that** the positioning of each suction cup (41) is independent from the others and is controlled automatically by entering the desired position through a user interface.

8. Method according to claim 1, **characterised in that** it further comprises applying auxiliary elements to facilitate the separation of the trays (1), said auxiliary elements being blowers (43) and brushes (54).

9. Method according to claim 8, **characterised in that** the blowers (43) introduce air between the tray (1) on which the suction cups (41) are applied and the tray (1) immediately below.

10. Method according to any of claims 8-9, **characterised in that** the blowers (43) are movable about a shaft, so that said blowers (43) can approach each other and are able to turn.

## Patentansprüche

1. Verfahren zum Entstapeln von Schalen (1), wobei die Schalen (1) eine erste Seite mit überwiegend konkaven Aufnahmen und eine zweite Seite mit überwiegend konvexen Ausstülpungen (11) aufweisen,
wobei das Verfahren die folgenden Schritte umfasst:
- Laden einer Vielzahl von gestapelten Schalen (1) in Aufnahmemittel, so dass die Schalen (1) sich zumeist in einer horizontalen Position befinden;
- Anheben der gestapelten Schalen (1) mit einer Hebebühne (3) bis zu einem Vereinzelungsmittel (4), das einen oder mehrere Saugnäpfe (41) aufweist, wobei die Hebebühne (3) die Aufnahmemittel umfasst, die so angeordnet sind, dass sie den Stapel der Schalen (1) aufnehmen;
- Positionieren des einen oder der mehreren Saugnäpfe (41) auf der zweiten Seite mit konvexen Ausstülpungen (11) der oberen Schale (1) des Stapels;
- Saugen, um die Saugnäpfe (41) an der Schale (1) zu befestigen;
- Vereinzeln der oberen Schale (1) von dem Stapel;
- Bewegen der vereinzelten Schale (1) bis zu einem angegebenen Lieferort; und
- Umdrehen der Schalen (1) vor dem Verlassen, so dass die erste Seite mit konkaven Aufnahmen nach oben zeigt und somit eine direkte Ablage der darauf zu transportierenden Gegenstände ermöglicht.

2. Verfahren nach Anspruch 1, **dadurch gekennzeichnet, dass** es das Laden der Vielzahl von Schalen (1) in die Aufnahmemittel durch ein Ladeband (2) und/oder das Bewegen der vereinzelten Schalen (1) zu einem Entladeband (5) an den angegebenen Lieferort umfasst.

3. Verfahren nach einem der Ansprüche 1 bis 2, **dadurch gekennzeichnet, dass** es ferner das Erfassen des Vorhandenseins von Schalen (1) auf der Hebeplattform (3) mittels eines Sensors und das Rückführen der Hebebühne (3) in ihre Position umfasst, wenn der Sensor erfasst, dass keine Schalen (1) zum Entstapeln auf der Hebebühne (3) vorhanden sind.

4. Verfahren nach einem der Ansprüche 1 bis 3 **dadurch gekennzeichnet, dass** es das abwechselnde Entstapeln von Schalen (1) von zwei Ladebändern (2) und zwei Hebebühnen (3) umfasst, die auf gegenüberliegenden Seiten eines einzigen Entladebandes (5) angeordnet sind.

5. Verfahren nach Anspruch 1, **dadurch gekennzeichnet, dass** im Schritt des Ladens der Schalen (1) die zweite Seite der Schale (1) rauer ist als die erste Seite, so dass die raue Seite nach oben zeigt.

6. Verfahren nach Anspruch 1, **dadurch gekennzeichnet, dass** der Schritt des Vereinzelns der Schalen (1) durch vier Saugnäpfe (41) erfolgt, die derart ausgebildet sind, dass sie an den vier Quadranten der Schale (1) platziert werden können.

7. Verfahren nach Anspruch 1, **dadurch gekennzeichnet, dass** das Positionieren jedes Saugnapfes (41) unabhängig von den anderen ist und automatisch durch Eingabe der gewünschten Position über eine Benutzerschnittstelle gesteuert wird.

8. Verfahren nach Anspruch 1, **dadurch gekennzeichnet, dass** es außerdem das Anwenden von Zusatzelementen umfasst, um das Vereinzeln der Schalen (1) zu erleichtern, wobei die Zusatzelemente Gebläse (43) und Bürsten (54) sind.

9. Verfahren nach Anspruch 8, **dadurch gekennzeichnet, dass** die Gebläse (43) Luft zwischen der Schale (1), an der die Saugnäpfe (41) angebracht sind, und der unmittelbar darunter liegenden Schale (1) einführen.

10. Verfahren nach einem der Ansprüche 8-9, **dadurch gekennzeichnet, dass** die Gebläse (43) um eine Welle beweglich sind, so dass sich die Gebläse (43) einander annähern können und in der Lage sind, sich zu drehen.

## Revendications

1. Procédé pour désempiler des plateaux (1), dans lequel les plateaux (1) comprennent un premier côté avec des réceptacles principalement concaves, et un second côté avec des protubérances principalement convexes (11), le procédé comprenant les étapes suivantes consistant à :
- Charger, dans des moyens de réception, une pluralité de plateaux empilés (1), de telle sorte que lesdits plateaux (1) soient principalement en position horizontale ;
- Soulever les plateaux empilés (1) avec une plate-forme de levage (3) vers le haut jusqu'à des moyens de séparation (4) ayant une ou plusieurs ventouses (41), ladite plate-forme de levage (3) comprenant les moyens de réception agencés pour recevoir la pile de plateaux (1) ;
- Positionner la ou les ventouses (41) sur le second côté avec des protubérances convexes (11) du plateau supérieur (1) de la pile ;
- Aspirer pour fixer les ventouses (41) sur le plateau (1) ;
- Séparer le plateau supérieur (1) de la pile ;
- Déplacer vers le haut le plateau séparé (1) jusqu'à un lieu de livraison spécifié ; et
- Retourner les plateaux (1) avant de les quitter, de manière à ce que le premier côté avec des réceptacles concaves soit orienté vers le haut et permette ainsi d'y déposer directement les objets à transporter.

2. Procédé selon la revendication 1, **caractérisé en ce qu'**il comprend le chargement de la pluralité de plateaux (1) dans les moyens de réception à travers une courroie de chargement (2) et/ou le déplacement des plateaux (1) séparés vers une courroie de déchargement (5) au lieu de livraison spécifié.

3. Procédé selon l'une quelconque des revendications 1 à 2 **caractérisé en ce qu'**il comprend en outre la détection de la présence de plateaux (1) sur la plate-forme de levage (3) au moyen d'un capteur, et le retour de la plate-forme de levage (3) à sa position lorsque le capteur détecte qu'il n'y a pas de plateaux (1) à désempiler sur la plate-forme de levage (3).

4. Procédé selon l'une quelconque des revendications 1 à 3 **caractérisé en ce qu'**il comprend alternativement le dépilage de plateaux (1) à partir de deux tapis de chargement (2) et de deux plates-formes élévatrices (3) situées sur des côtés opposés d'un seul tapis de déchargement (5).

5. Procédé selon la revendication 1, **caractérisé en ce que** l'étape de chargement des plateaux (1), le second côté du plateau (1) est plus rugueux que le premier côté, de sorte que le côté rugueux est orienté vers le haut.

6. Procédé selon la revendication 1, **caractérisé en ce que** l'étape de séparation des plateaux (1) est réalisée par quatre ventouses (41) adaptées pour être placées sur les quatre quadrants du plateau (1).

7. Procédé selon la revendication 1, **caractérisé en ce que** le positionnement de chaque ventouse (41) est indépendant des autres et est commandé automatiquement par la saisie de la position souhaitée via une interface utilisateur.

8. Procédé selon la revendication 1, **caractérisé en ce qu'**il comprend en outre l'application d'éléments auxiliaires pour faciliter la séparation des plateaux (1), lesdits éléments auxiliaires étant des souffleurs (43) et des brosses (54).

9. Procédé selon la revendication 8, **caractérisé en ce que** les souffleurs (43) introduisent de l'air entre le plateau (1) sur lequel sont appliquées les ventouses (41) et le plateau (1) immédiatement inférieur.

10. Procédé selon l'une quelconque des revendications 8 à 9, **caractérisé en ce que** les souffleurs (43) sont mobiles autour d'un arbre, de sorte que lesdits souffleurs (43) peuvent se rapprocher les uns des autres et sont capables de tourner.
